# EUROPEAN PATENT APPLICATION

(11) **EP 3 093 438 A1**
(43) Date of publication of application: **16.11.2016**
(21) Application number: 16159940.2
(22) Date of filing: 11.03.2016
(51) Int. Cl.: F01D 5/18

(54) **AIRFOIL WITH AN IMPINGEMENT CAVITY AND CORRESPONDING METHOD OF MAKING AN AIRFOIL**

(30) Priority: 12.05.2015 US 201514710397
(71) Applicant: United Technologies Corporation, Farmington, CT 06032 (US)
(72) Inventor: LEWIS, Scott D., Vernon, CT Connecticut 06066 (US); CORCORAN, Christopher, Manchester, CT Connecticut 06042 (US)
(74) Representative: Leckey, David Herbert

(57) **Abstract**

An airfoil (1) having one-sided pedestals (131) is disclosed. The airfoil (1) defines various cavities, such as an inflow feed cavity (110), an impingement cavity (130), and an outflow cavity. The various cavities are connected by crossover sections (120, 140) such as an inflow crossover section (120) and an outflow crossover section (140). Cooling air is conducted into the inflow feed cavity (110) and then out of the inflow feed cavity (110) through an inflow crossover section (120) into an impingement cavity (130), and through an impingement cavity (130). The cooling air may be conducted out of the impingement cavity (130) and into an outflow cavity through an outflow crossover section (140). Various cavities include one-wall pedestals (131). One-wall pedestals (131) are structures extending from a wall of a cavity into the void of the cavity, whereupon cooling air may impinge, effectuating convective cooling. A corresponding method of making such an airfoil is also provided.

## Description

### FIELD

The present disclosure relates to airfoils for gas turbine engines, and in particular, to airfoils having impingement cavities.

### BACKGROUND

In gas turbine engines, airfoils, such as rotor blades and stator vanes may include internal cavities in which cooling air is introduced to convectively cool the airfoil. However, such cooling air may transit the cooling cavities and may provide a limited cooling capability due to, for example, the limited wetting surface of the interior of the cooling cavity against which the cooling air may contact and from which the cooling air may conduct heat.

### SUMMARY

An airfoil is disclosed. The airfoil may include a first feed cavity defined within a body of the airfoil and configured to receive cooling air, a first impingement cavity defined within the body of the airfoil and having at least one impingement pedestal including a one-wall pedestal, and a first inflow crossover section defined within the body of the airfoil and configured to conduct the cooling air from the first feed cavity to the first impingement cavity wherein the one-wall pedestal includes a boss extending from a surface of the first impingement cavity and into a void defined by a boundary of the first impingement cavity.

In various embodiments, the one-wall pedestal includes a round boss, or a trapezoidal boss, or a triangular boss, or an oval boss. The one-wall pedestal may include a round boss having a height (H) and a diameter (D) defined according to a ratio wherein H/D < 1. The one wall pedestal may include a round boss having a height (H) and a diameter (D) defined according to a ratio wherein 0.25 ≤ H/D ≤ 4.0. A one-wall pedestal may include a boss having a height and an effective hydraulic diameter defined according to a ratio wherein 0.25 ≤ height/effective hydraulic diameter ≤ 4.0.

The first inflow crossover section may include a linear crossover channel. The first inflow crossover section may include a staggered crossover channel. Moreover, the airfoil may include a first outflow crossover section defined within the body of the airfoil and configured to conduct the cooling air away from the first impingement cavity. Furthermore, the first inflow crossover section may include a staggered crossover channel and the first outflow crossover section may include a staggered crossover channel.

In various embodiments, the first inflow crossover section may be registered a first distance from an engine central longitudinal axis and the first outflow crossover section may be registered a second distance from the engine central longitudinal axis, wherein the first distance and the second distance are different distances.

In various embodiments, the first impingement cavity may include a plurality of impingement pedestals arranged into a first row and a second row. The first row and the second row may be registered relative to an engine central longitudinal axis wherein the impingement pedestals of the first row do not align with the impingement pedestals of the second row. The first feed cavity may include at least one impingement pedestal having a one-wall pedestal.

A method of making an airfoil is disclosed. The method may include forming a first feed cavity defined within a body of the airfoil and configured to receive cooling air, forming a first impingement cavity defined within the body of the airfoil and having at least one impingement pedestal including a one-wall pedestal, and forming an inflow crossover section defined within the body of the airfoil and configured to conduct cooling air from the first feed cavity to the first impingement cavity. The one-wall pedestal may include a boss formed to extend from a surface of the first impingement cavity and into a void defined by a boundary of the first impingement cavity. The one-wall pedestal may include a round boss having a height and a diameter defined according to a ratio wherein 0.25 ≤ H/D ≤ 4.0.

Also disclosed is an airfoil is disclosed including a first feed cavity disposed near a leading edge of the airfoil and defined within a body of the airfoil and configured to receive cooling air, a second feed cavity disposed between the leading edge of the airfoil and a trailing edge of the airfoil and defined within the body of the airfoil and configured to receive cooling air. The airfoil may also include a first impingement cavity defined within the body of the airfoil and having at least one impingement pedestal including a one-wall pedestal having a boss extending from a surface of the first impingement cavity and into a void defined by a boundary of the first impingement cavity, a second impingement cavity defined within the body of the airfoil and having at least one impingement pedestal including a one-wall pedestal having a boss extending from a surface of the second impingement cavity and into a void defined by a boundary of the second impingement cavity. The airfoil may include a third impingement cavity defined within the body of the airfoil and having at least one impingement pedestal including a one-wall pedestal having a boss extending from a surface of the third impingement cavity and into a void defined by a boundary of the third impingement cavity. The airfoil may include a first crossover section defined within the body of the airfoil and configured to conduct cooling air from the first feed cavity to the first impingement cavity, a second crossover section defined within the body of the airfoil and configured to conduct cooling air from the second feed cavity to the second impingement cavity, a third crossover section defined within the body of the airfoil and configured to conduct cooling air from the second feed cavity to the third impingement cavity.

Although not presently claimed the Applicant expressly reserves the right to claim this airfoil independently, either in the present application or a divisional thereof.

The airfoil may be a rotor blade.

Additionally or alternatively, each one-wall pedestal may be one of zigzag staggering and a round boss.

Additionally or alternatively, the airfoil may further comprise a third feed cavity disposed near the trailing edge of the airfoil and defined within the body of the airfoil and configured to receive cooling air.

Additionally or alternatively, the airfoil may include a fourth impingement cavity defined within the body of the airfoil and including at least one impingement pedestal having a one-wall pedestal including a boss extending from a surface of the fourth impingement cavity and into a void defined by a boundary of the fourth impingement cavity, and, optionally a fourth crossover section defined within the body of the airfoil and configured to conduct cooling air from the third feed cavity to the fourth impingement cavity.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
Figure 1 depicts a cross-sectional view of a gas turbine engine, in accordance with various embodiments;
Figure 2 depicts a block diagram showing the functional relationships of various cooling cavities in accordance with various embodiments;
Figure 3 depicts various aspects of an airfoil of a gas turbine engine having various impingement cavities, in accordance with various embodiments;
Figure 4A depicts aspects of an airfoil of a gas turbine engine having a staggered crossover section in accordance with various embodiments;
Figure 4B depicts aspects of an airfoil of a gas turbine engine having a linear crossover section in accordance with various embodiments;
Figures 5A-C depicts various one-wall pedestals having various shapes in accordance with various embodiments;
Figure 6A depicts various cooling cavities of an example airfoil in accordance with various embodiments;
Figure 6B depicts various aspects of an example airfoil having a one-wall pedestals arranged in to a first row, a second row, a third row, and a fourth row in accordance with various embodiments;
Figure 6C depicts various aspects of an example one-wall pedestal having a height (H) and a diameter (D), in accordance with various embodiments; and
Figure 7 depicts various aspects of an example airfoil having an inflow crossover section and an outflow crossover section each registered a different distance from an engine central longitudinal axis.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice embodiments of the disclosure, it should be understood that other embodiments may be realized and that logical changes and adaptations in design and construction may be made in accordance with this invention and the teachings herein. Thus, the detailed description herein is presented for purposes of illustration only and not limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Furthermore, any reference to singular includes plural embodiments, and any reference to more than one component or step may include a singular embodiment or step. Surface shading lines may be used throughout the figures to denote different parts but not necessarily to denote the same or different materials.

As used herein, "fluid" may refer to a gas, a liquid, and/or a gas/liquid mixture. For example, "fluid" may include fuel, air, a fuel/air mixture, and/or other liquids such as water vapor, alcohol, or other liquids.

As used herein, "aft" refers to the direction associated with the exhaust (e.g., the back end) of a gas turbine engine. As used herein, "forward" refers to the direction associated with the intake (e.g., the front end) of a gas turbine engine.

A first component that is "axially outward" of a second component means that a first component is positioned at a greater distance in the aft or forward direction away from the longitudinal center of a gas turbine along the engine central longitudinal axis of the gas turbine, than the second component. A first component that is "axially inward" of a second component means that the first component is positioned closer to the longitudinal center of the gas turbine along the engine central longitudinal axis of the gas turbine, than the second component.

A first component that is "radially outward" of a second component means that a first component is positioned at a greater distance away from the engine central longitudinal axis, than the second component. A first component that is "radially inward" of a second component means that the first component is positioned closer to the engine central longitudinal axis, than the second component. In the case of components that rotate circumferentially about the engine central longitudinal axis, a first component that is radially inward of a second component rotates through a circumferentially shorter path than the second component.

A first component that is "axially forward" of a second component means that a first component is positioned nearer to the leading edge and farther from the trailing edge of a rotating structure, than the second component. A first component that is "axially aft" of a second component means that the first component is positioned farther from the leading edge and nearer to the trailing edge of a rotating structure, than the second component.

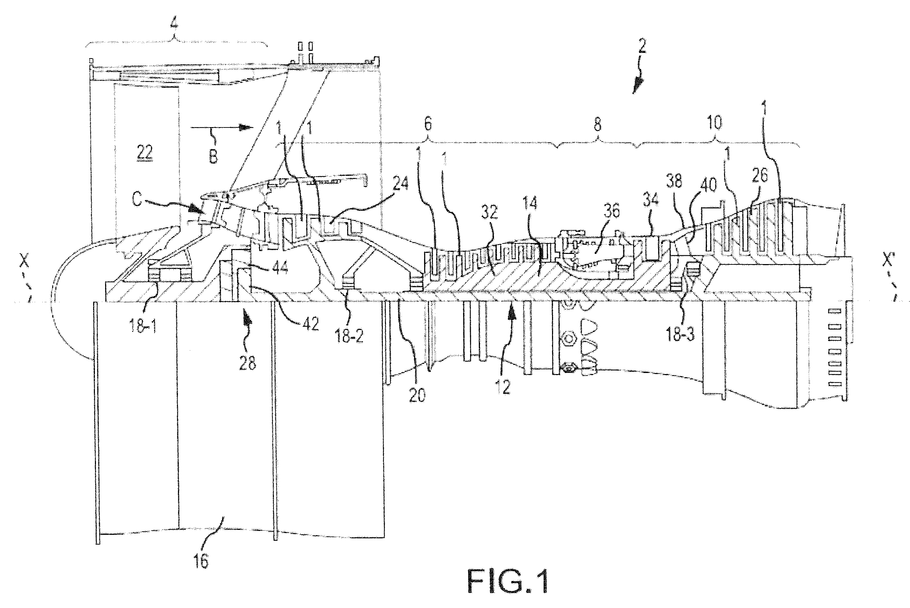

In various embodiments and with reference to FIG. 1, an exemplary gas turbine engine 2 is provided. Gas turbine engine 2 may be a two-spool turbofan that generally incorporates a fan section 4, a compressor section 6, a combustor section 8 and a turbine section 10. Alternative engines may include, for example, an augmentor section among other systems or features. In operation, fan section 4 can drive air along a bypass flow-path B while compressor section 6 can drive air along a core flow-path C for compression and communication into combustor section 8 then expansion through turbine section 10. Although depicted as a turbofan gas turbine engine 2 herein, it should be understood that the concepts described herein are not limited to use with turbofans as the teachings may be applied to other types of turbine engines including three-spool architectures.

Gas turbine engine 2 may generally comprise a low speed spool 12 and a high speed spool 14 mounted for rotation about an engine central longitudinal axis X-X' relative to an engine static structure 16 via several bearing systems 18-1, 18-2, and 18-3. It should be understood that various bearing systems at various locations may alternatively or additionally be provided, including for example, bearing system 18-1, bearing system 18-2, and bearing system 18-3.

Low speed spool 12 may generally comprise an inner shaft 20 that interconnects a fan 22, a low pressure compressor section 24 (e.g., a first compressor section) and a low pressure turbine section 26 (e.g., a first turbine section). Inner shaft 20 may be connected to fan 22 through a geared architecture 28 that can drive the fan 22 at a lower speed than low speed spool 12. Geared architecture 28 may comprise a gear assembly 42 enclosed within a gear housing 44. Gear assembly 42 couples the inner shaft 20 to a rotating fan structure. High speed spool 14 may comprise an outer shaft 30 that interconnects a high pressure compressor section 32 (e.g., second compressor section) and high pressure turbine section 34 (e.g., second turbine section). A combustor 36 may be located between high pressure compressor section 32 and high pressure turbine section 34. A mid-turbine frame 38 of engine static structure 16 may be located generally between high pressure turbine section 34 and low pressure turbine section 26. Mid-turbine frame 38 may support one or more bearing systems 18 (such as 18-3) in turbine section 10. Inner shaft 20 and outer shaft 30 may be concentric and rotate via bearing systems 18 about the engine central longitudinal axis X-X', which is collinear with their longitudinal axes. As used herein, a "high pressure" compressor or turbine experiences a higher pressure than a corresponding "low pressure" compressor or turbine.

The core airflow C may be compressed by low pressure compressor section 24 then high pressure compressor section 32, mixed and burned with fuel in combustor 36, then expanded over high pressure turbine section 34 and low pressure turbine section 26. Mid-turbine frame 38 includes airfoils 40, which are in the core airflow path. Turbines 26, 34 rotationally drive the respective low speed spool 12 and high speed spool 14 in response to the expansion.

Gas turbine engine 2 may be, for example, a high-bypass geared aircraft engine. In various embodiments, the bypass ratio of gas turbine engine 2 may be greater than about six (6). In various embodiments, the bypass ratio of gas turbine engine 2 may be greater than ten (10). In various embodiments, geared architecture 28 may be an epicyclic gear train, such as a star gear system (sun gear in meshing engagement with a plurality of star gears supported by a carrier and in meshing engagement with a ring gear) or other gear system. Geared architecture 28 may have a gear reduction ratio of greater than about 2.3 and low pressure turbine section 26 may have a pressure ratio that is greater than about 5. In various embodiments, the bypass ratio of gas turbine engine 2 is greater than about ten (10:1). In various embodiments, the diameter of fan 22 may be significantly larger than that of the low pressure compressor section 24, and the low pressure turbine section 26 may have a pressure ratio that is greater than about 5:1. Low pressure turbine section 26 pressure ratio may be measured prior to inlet of low pressure turbine section 26 as related to the pressure at the outlet of low pressure turbine section 26 prior to an exhaust nozzle. It should be understood, however, that the above parameters are exemplary of various embodiments of a suitable geared architecture engine and that the present disclosure contemplates other turbine engines including direct drive turbofans.

In various embodiments, the next generation of turbofan engines may be designed for higher efficiency, which is associated with higher pressure ratios and higher temperatures in the high speed spool 14. These higher operating temperatures and pressure ratios may create operating environments that may cause thermal loads that are higher than thermal loads conventionally encountered, which may shorten the endurance life of current components.

In various embodiments, high speed spool 14 may comprise alternating rows of airfoils 1, such as rotating rotors and stationary stators. Stators may have a cantilevered configuration or a shrouded configuration. More specifically, stators may comprise an airfoil, such as a stator vane, a casing support (such as an upper vane attachment rail) and a hub support (such as a lower vane attachment rail). In this regard, a stator vane may be supported along an outer diameter by casing support and along an inner diameter by a hub support. In contrast, a cantilevered stator may comprise a stator vane that is only retained and/or supported at the casing (e.g., an outer diameter) (such as an upper vane attachment rail).

In various embodiments, airfoils 1 such as rotors may be configured to compress and spin a fluid flow. Airfoils 1 such as stators may be configured to receive and straighten the fluid flow. In operation, the fluid flow discharged from the trailing edge of stators may be straightened (e.g., the flow may be directed in a substantially parallel path to the centerline of the engine and/or high pressure section) to increase and/or improve the efficiency of the engine and, more specifically, to achieve maximum and/or near maximum compression and efficiency when the straightened air is compressed and spun by rotor(s).

Operating conditions in high pressure compressor section 32 may be approximately 1400 °F (approximately 760°C) or more. As noted above and with reference to FIG. 1, airfoils 1 are subject to a high external heat load.

As such, cooling holes may be positioned in the surface of an airfoil 1. Cooling air may be ejected from the cooling holes. The cooling holes may be configured to produce a layer of cooling air that flows over the leading edge surface and/or other surfaces to protect the metal surface from exposure to the high temperature hot gas flow. The cooling air may be ejected in a radial direction and/or an axial direction of the blade or vane. A portion of the cooling air may thus migrate onto the leading edge surface of the blade or vane to provide a layer of cooling air.

Moreover, cooling channels may be positioned within the interior volume an airfoil 1. Cooling air may be conducted through the cooling channels in route to the cooling holes. The cooling channels may be configured to conduct heat from the blades and/or vane, to the cooling air flowing through the cooling channel to protect the blade and/or vane from overheating. Moreover, cooling channels may convectively conduct heat away from the airfoil 1.

With reference to FIGs. 1-3, in various embodiments, airfoils 1 such as rotors and stators may undergo significant heating. Rotors and stators may have various cavities disposed therein through which a cooling fluid, such as cooling air may flow. The cooling air may flow through the various cavities and conduct heat away from the airfoil 1, cooling the airfoil 1. Various features may be disposed within the cavities to interact with the flowing air and provide surface area for the cooling air to contact. For instance, one-wall pedestals, as discussed further herein may be disposed within the various cavities to increase the wetting surface area in contact with cooling air passing through the cavities. Moreover, the one-wall pedestals may be non-parallel to the direction of flow of the cooling air, so that the one-wall pedestal at least one of extends through a boundary layer of the flowing cooling air or disrupts a flow of the cooling air, so that the air impinges against a portion of the one-wall pedestal, further enhancing heat transfer from the airfoil 1 to the cooling air. For instance, an airfoil 1 may comprise a feed cavity 110, an inflow crossover section 120, an impingement cavity 130, and an outflow crossover section 140.

Cooling air may enter a feed cavity 110, be conducted through inflow crossover section 120 into an impingement cavity 130, and be conducted out the impingement cavity 130 via outflow crossover section 140.

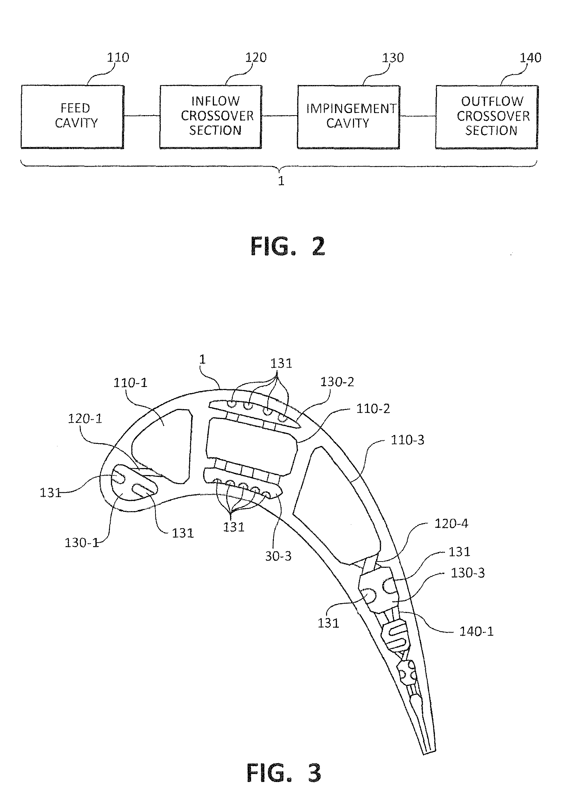

With specific reference to FIG. 3, an airfoil 1 may have body defining various combinations of the various features discussed above. For instance, a first feed cavity 110-1 may be disposed near the leading edge of an airfoil 1, a second fed cavity 110-2 may be disposed generally in the middle area of an airfoil 1, and a third feed cavity 110-3 may be disposed toward the trailing edge of the airfoil 1. Moreover, each feed cavity may conduct cooling air to a variety of inflow cross over sections. For instance, the first feed cavity 110-1 may conduct cooling air into a first inflow crossover section 120-1, the second feed cavity 110-2 may conduct cooling air into both a second inflow crossover section 120-2 and a third inflow crossover section 120-3, and a third feed cavity 110-3 may conduct cooling air into a fourth inflow crossover section 120-4.

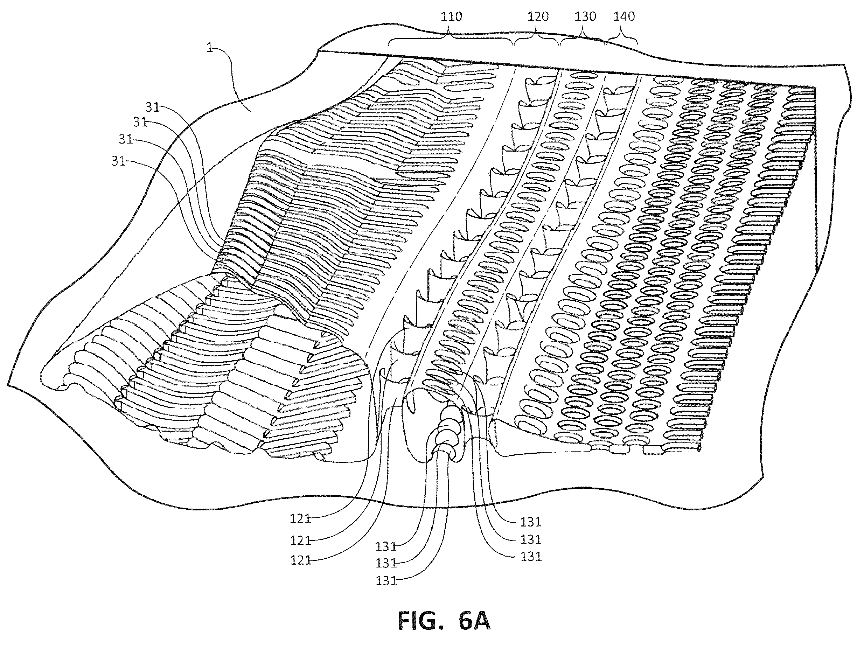

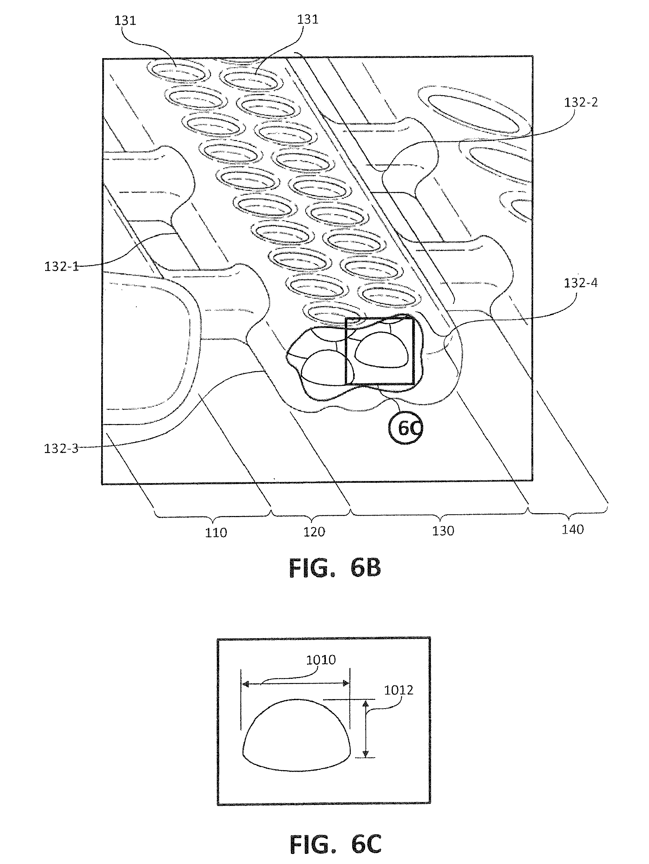

Moreover, the first crossover section may conduct cooling air into a first impingement cavity 130-1 having one or more impingement pedestal 131 disposed therein. The second crossover section may conduct cooling air into a second impingement cavity 130-2 having one or more impingement pedestal 131 disposed therein. Similarly, the third inflow crossover section 120-3 may conduct cooling air into a third impingement cavity 130-3 having one or more impingement pedestal 131 disposed therein. Finally, the fourth inflow crossover section 120-4 may conduct cooling air into a fourth impingement cavity 130-4 having one or more impingement pedestal 131 disposed therein. In various embodiments, one or more impingement pedestals 131 is also disposed in various other cavities. For example, impingement pedestals 131 may be disposed in a feed cavity 110, such as a first feed cavity 110-1 (see FIG. 6A).

Moreover, the cooling air may leave each impingement cavity via one or more outflow crossover sections 140. For instance, cooling air may be conducted from a first impingement cavity 130-1 via a first outflow crossover section 140-1, from a second impingement cavity 130-2 via a second outflow crossover section 140-2, from a third impingement cavity 130-3 via a third outflow crossover section 140-3, and from a fourth impingement cavity 130-4 via a fourth outflow crossover section 140-4.

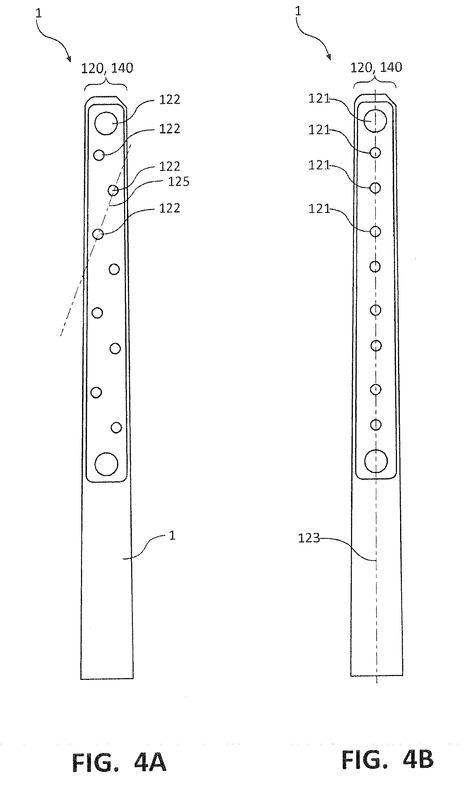

With reference now to FIGs. 4A-B, an inflow crossover section 120 and/or an outflow crossover section 140 of an airfoil 1 may comprise an array of linear crossover channels 121. A linear crossover channel 121 may comprise a passage defined by and through the airfoil 1 and aligned along a shared alignment vector 123. The shared alignment vector 123 may comprise a one-dimensional line transiting each linear crossover channel 121 of an inflow crossover section 120 and/or an outflow crossover section 140 at corresponding points. For instance, the shared alignment vector 123 may comprise a line transiting the center of a cross-section of each linear crossover channel 121 of the inflow crossover section 120 and/or an outflow crossover section 140. In various embodiments, the shared alignment vector 123 is parallel to a line extending radially outward relative to the engine central longitudinal axis X-X'.

An inflow crossover section 120 and/or an outflow crossover section 140 of an airfoil 1 may comprise an array of staggered crossover channels 122. A staggered crossover channel 122 may comprise a passage defined by and through the airfoil 1 and having a center of a cross section of the staggered crossover channel 122 that is not aligned with at least one adjacent staggered crossover channel 122. For instance, of any chosen group of three adjacent staggered crossover channels 122, a line 125 drawn through corresponding points of any two of the adjacent staggered crossover channels 122 will not pass through a corresponding point of the third adjacent staggered crossover channel 122.

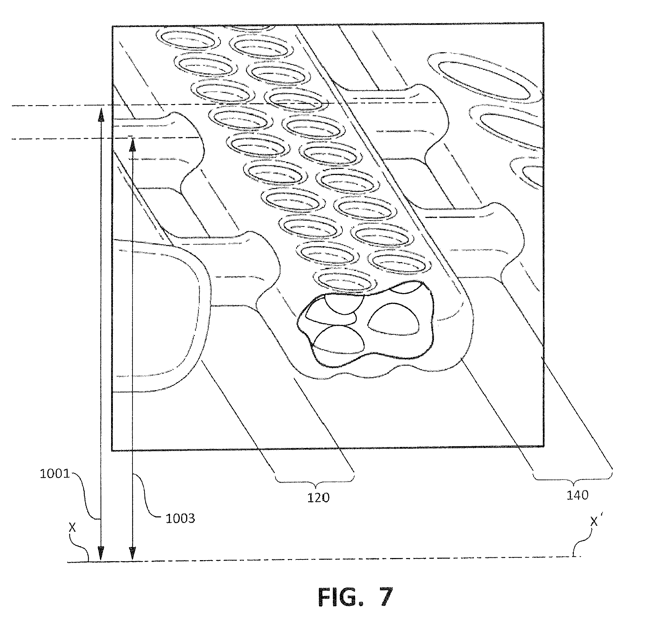

With reference now to FIG. 7, an inflow crossover section 120 may be registered a first distance 1001 from an engine central longitudinal axis X-X' and an outflow crossover section 140 may be registered a second distance 1003 from an engine central longitudinal axis X-X'. In various embodiments, first distance 1001 and second distance 1003 may be the same distance. In further embodiments, first distance 1001 and second distance 1003 may be different distances, for example, so that the cooling air flowing into an impingement cavity 130 on a path co-axial with the path(s) of the inflow crossover section 120 travels a distance generally radial to the path co-axial with the path(s) of the inflow crossover section 120 and/or co-axial with the path of the impingement cavity 130 before reaching the outflow crossover section 140. In this manner, the convective cooling of the cooling air within the impingement cavity 130 may be increased.

With reference now to FIGs. 6A-C, as mentioned, impingement pedestals 131 may be disposed within various cavities, such as an impingement cavity 130. Each impingement pedestal 131 comprises a one-wall pedestal, meaning that the pedestal comprises a boss that extends from one surface of the cavity and into the void defined by the boundaries of the cavity, whereas a traditional pedestal extends from one surface of the cavity and into the void defined by the boundaries of the cavity and then integrally joins another opposing surface of the cavity, so as to penetrate entirely through the void and join a surface of the cavity at each opposing end. Each impingement pedestal 131 may have a shape. In various embodiments, an impingement pedestal 131 may comprise a round boss. Moreover, an impingement pedestal 131 may comprise a partial hemisphere boss, such as a half hemisphere boss, or a partial hemisphere joined with a cylindrical or conic section. An impingement pedestal 131 may comprise a non-round boss, such as having features that are oval, triangular, filleted, trapezoidal, and the like. An impingement pedestal 131 may have height 1012 and a diameter 1010. An impingement pedestal 131 may comprise a combination of features, such as comprising a round boss with fillet, or a half-hemisphere boss with fillet, or a boss having arcuate and planar surfaces, and/or the like. In various embodiments, the height (H) 1012 of the impingement pedestal 131 is less than the diameter (D) 1010 of the impingement pedestal 131 so that the ratio of height 1012 to diameter 1010 comprises a range, for example 0 < H/D < 1. In various embodiments, the ratio of height 1012 to diameter 1010 comprises a range, for example, 0.15 ≤ H/D ≤ 4.0, or 0.25 ≤ H/D ≤ 4.0, or 0.25 ≤ H/D ≤ 2.5, or any range as desired. As used herein, diameter 1010 may be the width at the base of the impingement pedestal 131 before fillets (if any) are added. In various embodiments, wherein the impingement pedestal 131 is non-round at the base, the diameter in the H/D ratio may be replaced with an "effective hydraulic diameter." An "effective hydraulic diameter" as used herein, equals four times the area of a cross-section of the impingement pedestal taken at its base divided by its perimeter taken at its base.

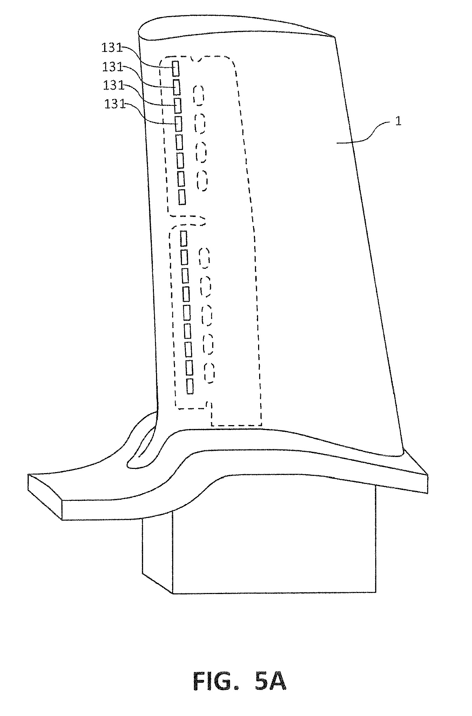

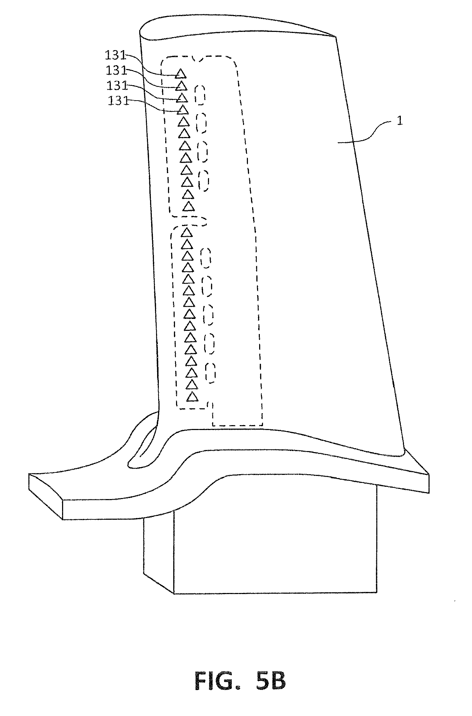

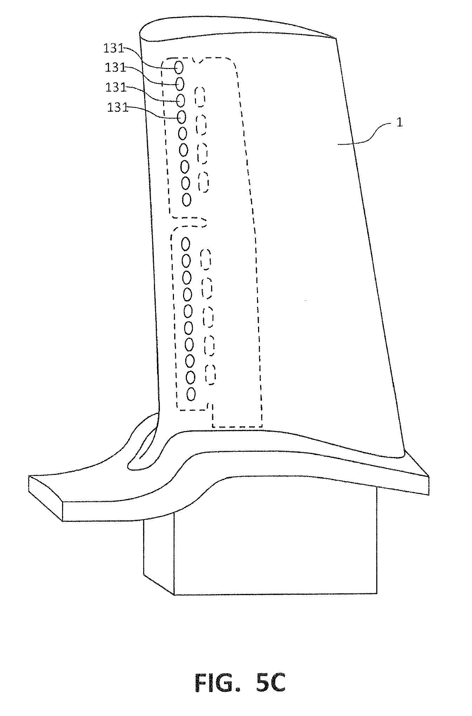

In various embodiments, an impingement pedestal 131 may be a line, such as a zigzag line comprising staggering. With reference to FIG. 5A, an impingement pedestal 131 may be trapezoidal. Alternatively, with reference to FIG. 5B, an impingement pedestal 131 may be triangular. Furthermore, with reference to FIG. 5C, an impingement pedestal 131 may be oval. Thus, an impingement pedestal 131 may comprise any shape as desired.

Additionally, with reference now to FIG. 6B, impingement pedestals 131 may be arranged into rows. For example, impingement pedestals 131 may be arranged in to a first row 132-1 and a second row 132-2 disposed on one side of a cavity, such as an impingement cavity 130, and into a third row 132-3 and a fourth row 132-4 disposed on another side of a cavity, such as an impingement cavity 130. In various embodiments, the rows may be registered relative to an engine central longitudinal axis X-X' so that the impingement pedestals 131 of the rows do not align. For instance, first row 132-1 and second row 132-2 may be uniquely registered, whereas, optionally, third row 132-3 may be registered coincident with first row 132-1 and fourth row 132-4 may be registered coincident with second row 132-2. In further embodiments, each row may have a unique registration. In this manner, the wetted surface area may be enhanced.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An airfoil (1) comprising:
a first feed cavity (110) defined within a body of the airfoil (1) and configured to receive cooling air;
a first impingement cavity (130) defined within the body of the airfoil (1) and comprising a one-wall pedestal (131);
a first inflow crossover section (120) defined within the body of the airfoil (1) and configured to conduct the cooling air from the first feed cavity (110) to the first impingement cavity (130),
wherein the one-wall pedestal (131) comprises a boss extending from a surface of the first impingement cavity (130) and into a void defined by a boundary of the first impingement cavity (130).

2. The airfoil according to claim 1, wherein the one-wall pedestal (131) comprises a round boss.

3. The airfoil according to claim 1, wherein the one-wall pedestal (131) comprises a trapezoidal boss.

4. The airfoil according to claim 1, wherein the one-wall pedestal (131) comprises a triangular boss.

5. The airfoil according to claim 1, wherein the one-wall pedestal (131) comprises an oval boss.

6. The airfoil according to claim 1, wherein the one-wall pedestal (131) comprises a round boss having a height (H) and a diameter (D) defined according to a ratio wherein 0.25 ≤ H/D ≤ 4.0.

7. The airfoil according to any of claims 1 to 5, wherein the one-wall pedestal (131) has a height and an effective hydraulic diameter defined according to a ratio wherein 0.25 ≤ height/effective hydraulic diameter ≤ 4.0.

8. The airfoil according to any preceding claim, wherein the first inflow crossover section (120) comprises a linear crossover channel (121).

9. The airfoil according to any preceding claim, wherein the first inflow crossover section (120) comprises a staggered crossover channel (122).

10. The airfoil according to any preceding claim, wherein the airfoil (1) comprises a first outflow crossover section (140) defined within the body of the airfoil (1) and configured to conduct the cooling air away from the first impingement cavity (130), wherein, optionally, the first inflow crossover section (120) comprises a/the staggered crossover channel (122) and the first outflow crossover section (140) comprises a staggered crossover channel (122).

11. The airfoil according to claim 10, wherein the first inflow crossover section (120) is registered a first distance (100) from an engine central longitudinal axis (X-X') and the first outflow crossover section (140) is registered a second distance (1003) from the engine central longitudinal axis (X-X'), wherein the first distance (1001) and the second distance (1003) are different distances.

12. The airfoil according to any preceding claim, wherein the first impingement cavity (130) comprises a plurality of impingement pedestals (131) arranged into a first row (132-1) and a second row (132-2), wherein, optionally, the first row (132-1) and the second row (132-2) are registered relative to an/the engine central longitudinal axis (X-X') wherein the impingement pedestals (131) of the first row (132-1) do not align with the impingement pedestals (131) of the second row (132-2).

13. The airfoil according to any preceding claim, wherein the first feed cavity (110) further comprises a one-wall pedestal (131).

14. A method of making an airfoil (1) comprising:
forming a first feed cavity (110) defined within a body of the airfoil (1) and configured to receive cooling air;
forming a first impingement cavity (130) defined within the body of the airfoil (1) and comprising a one-wall pedestal (131); and
forming an inflow crossover section (120) defined within the body of the airfoil (1) and configured to conduct cooling air from the first feed cavity (110) to the first impingement cavity (130),
wherein the one-wall pedestal (131) comprises a boss formed to extend from a surface of the first impingement cavity (130) and into a void defined by a boundary of the first impingement cavity (130).

15. The method according to claim 14, wherein the one-wall pedestal (131) comprises a round boss having a height (H) and a diameter (D) defined according to a ratio wherein 0.25 ≤ H/D ≤ 4.0.
